# EUROPÄISCHE PATENTSCHRIFT

(11) **EP 2 730 488 B1**
(45) Veröffentlichungstag und Bekanntmachung des Hinweises auf die Patenterteilung: **06.09.2017**
(21) Anmeldenummer: 13003355.8
(22) Anmeldetag: 02.07.2013
(51) Int. Cl.: B62D 61/12, B62D 59/04, B62D 63/06

(54) **Einhänger für ein Nutzfahrzeug**
Attachment for a utility vehicle
Dispositif pour l'attachement sur un véhicule utilitaire

(30) Priorität: 09.11.2012 DE 102012022049
(43) Veröffentlichungstag der Anmeldung: 14.05.2014
(73) Patentinhaber: MAN Truck & Bus AG, 80995 München (DE)
(72) Erfinder: Theobald, Markus, 85764 Oberschleißheim (DE)
(74) Vertreter: v. Bezold & Partner Patentanwälte - PartG mbB

(56) Entgegenhaltungen:
- EP-A1- 2 277 766
- WO-A2-2010/145661
- US-A1- 2006 254 833
- US-A1- 2009 229 895

## Beschreibung

Die Erfindung betrifft einen Einhänger für ein Fahrzeug, insbesondere ein mehrspuriges Kraftfahrzeug (z.B. ein Personenkraftwagen) und/oder einen mehrspurigen Kraftfahrzeug-Anhänger, vorzugsweise ein Nutzfahrzeug (z.B. ein Lastkraftwagen oder ein Omnibus) und/oder ein Nutzfahrzeug-Anhänger. Die WO 2010/145661 A2 offenbart einen Einhänger nach dem Oberbegriff des Anspruchs 1 und ein Fahrzeug nach dem Oberbegriff des Anspruchs 24. Kraftfahrzeuge, die ausschließlich mit Verbrennungsmotoren angetrieben werden, sind im Stand der Technik bekannt und weisen insbesondere den Nachteil eines hohen Kraftstoffverbrauchs auf. Im Stand der Technik sind zudem bereits Kraftfahrzeuge bekannt, in die alternative Antriebe (z.B. Elektroantriebe) zur Bildung von Hybridantrieben integriert sind, mittels denen der Nachteil des hohen Kraftstoffverbrauchs reduziert werden kann. Allerdings erfordern Hybridantriebe, insbesondere Elektrohybridantriebe einen großen Integrations- und Modifikationsaufwand an den Kraftfahrzeugen, um den Hybridantrieb darstellen zu können. Des Weiteren führen die Hybridantriebe zu einem zum Teil beträchtlichen Zusatzgewicht für die Kraftfahrzeuge, selbst dann, wenn die alternativen Antriebe z.B. während einer quasi statischen Fahrt per se gar nicht gebraucht werden. Des Weiteren ist der Raum, der zur Unterbringung von Kraftfahrzeugkomponenten (z.B. Verbrennungsmotor, alternative Antriebseinrichtung, Kraftstoffspeicher, alternativer Energiespeicher, Nebenaggregate, etc.) in den Kraftfahrzeugen dient, stark begrenzt, wodurch die Freiheit in der Anordnung und Ausbildung der Kraftfahrzeugkomponenten entsprechend beschränkt ist.

Eine Aufgabe der Erfindung ist es, eine Möglichkeit zu schaffen, mittels der Kraftfahrzeuge mit einer oder mehreren Basis- und/oder Zusatzfunktionen ausgestattet werden können, ohne den innerhalb des Kraftfahrzeugs zur Verfügung stehenden Raum wesentlich zu beanspruchen.

Diese Aufgabe kann mit den Merkmalen der Haupt- und Nebenansprüche gelöst werden. Vorteilhafte Weiterbildungen können den Unteransprüchen entnommen werden.

Die Erfindung stellt einen Einhänger für ein Fahrzeug zur Verfügung. Das Fahrzeug ist ein mehrspuriges Kraftfahrzeug (z.B. ein Personenkraftwagen) und/oder ein mehrspuriger Kraftfahrzeug-Anhänger, vorzugsweise ein Nutzfahrzeug (z.B. ein Lastkraftwagen oder ein Omnibus) und/oder ein Nutzfahrzeug-Anhänger. Der Einhänger umfasst zumindest ein Rad, vorzugsweise zumindest zwei Räder, eine Kopplungseinrichtung, über die der Einhänger zweckmäßig demontierbar mit dem Fahrzeug verbindbar ist, und zumindest einen Aufnahmeraum für zumindest eine Funktionseinrichtung.

Der Einhänger zeichnet sich insbesondere dadurch aus, dass er ausgeführt ist, um samt Rad und/oder samt Aufnahmeraum unter das Fahrzeug platziert zu werden.

Der Einhänger kann zweckmäßig genutzt werden, um sonst üblicherweise im Fahrzeug integrierte Funktionseinrichtungen (z.B. ein alternativer Antrieb, ein Hilfsantrieb, ein Energiespeicher, ein Fahrzeugaggregat (etwa ein Fahrzeugnebenaggregat, ein Fahrzeug-Zusatzverbraucher, ein Fahrzeug-Nebenantrieb, etc.), etc.) oder Zusatz-Funktionseinrichtungen (z.B. ein Range-Extender, ein alternativer Antrieb, ein Hilfsantrieb, ein Energiespeicher, ein Fahrzeugaggregat (etwa ein Fahrzeugnebenaggregat, ein Fahrzeug-Zusatzverbraucher, ein Fahrzeug-Nebenantrieb, etc.) etc.) aufzunehmen. Der Einhänger kann nach Bedarf an das Fahrzeug angebracht und nach Bedarf davon entfernt werden. Dadurch wird ermöglicht, dass das Einhänger-Zusatzgewicht nicht ständig von dem Fahrzeug mitgeführt werden muss. Ein Einhänger kann z.B. an das Fahrzeug montiert werden, wenn die im Einhänger aufgenommene Funktionseinrichtung erforderlich oder wirtschaftlich ist, bzw. davon entfernt werden, wenn dem nicht so ist. Der an- und abkoppelbare Einhänger kann somit zur Gewichts- und folglich Kraftstoffreduzierung des Fahrzeugs beitragen. Mittels des Einhängers kann der Nachteil beseitigt werden, dass Fahrzeuge Zusatzgewicht quasi permanent mitführen, obwohl es tatsächlich gar nicht erforderlich wäre. Erfindungsgemäße Einhänger können z.B. in Logistikzentren, insbesondere bei Nichtbedarf oder Entladung, abgegeben, dort vorzugsweise temperatur-/wettergeschützt gelagert und optional aufgeladen werden und/oder in Logistikzentren nach Bedarf gechartert werden. So kann gewährleistet werden, dass quasi stets betriebsbereite Einhänger zur Verfügung stehen. Der Einhänger kann zudem dazu dienen, eine oder mehrere Fahrzeugachsen zu entlasten und z.B. zweckmäßig als Liftachse zu fungieren. Mittels Verwendung des zumindest einen Rads zählt der Einhänger nicht zur Fahrzeugmasse, sondern ist als besondere Art Anhänger einzustufen. Somit kann verhindert werden, dass die Nutzlast des Fahrzeugs durch den Einhänger reduziert wird. Die Erfindung ist nicht auf Ausführungsformen beschränkt, die sämtliche zuvor genannten Vorteile aufweisen bzw. die sämtliche eingangs oder zuvor beschriebenen Nachteile des Stands der Technik beseitigen. Vielmehr beansprucht die Erfindung auch allgemeinen Schutz für die folgenden Ausführungsformen.

So ist es möglich, dass der Einhänger ausgeführt ist, um mitsamt Rad und/oder mitsamt Aufnahmeraum und vorzugsweise mitsamt Kopplungseinrichtung hinter der Frontseite und vor der Heckseite des Fahrzeugs platziert zu werden. Dadurch kann z.B. gewährleistet werden, dass durch den Einhänger das Fahrzeug nicht oder nur geringfügig verlängert wird und/oder der Einhänger nahe zu einer oder mehreren Fahrzeugkomponenten positionierbar ist, die mit dem Einhänger in Wirkverbindung zu bringen sind. Allerdings umfasst die Erfindung auch Ausführungsformen, in denen ein Teil des Einhängers sich hinter oder sogar seitlich neben dem Fahrzeug erstreckt.

Der Einhänger kann z.B. dazu dienen, sonst üblicherweise in das Fahrzeug integrierte Funktionseinrichtungen aufzunehmen und/oder das Fahrzeug mit Zusatzfunktionen auszustatten.

Der Einhänger kann z.B. mit einer oder mehreren der folgenden Funktionseinrichtungen ausgestattet sein: einem Range-Extender, einem Kraftstofftank, einem Energiespeicher, insbesondere einer Batterieeinrichtung, einem Fahrzeugaggregat (z.B. ein Fahrzeug-Nebenaggregat und/oder ein Fahrzeug-Zusatzverbraucher, etwa ein Ladebordwandantrieb eines Nutzfahrzeugs) und/oder einer zweckmäßig motorisierten Antriebseinrichtung (z.B. ein Hilfsantrieb). Der Energiespeicher und/oder die Antriebseinrichtung kann für ein im Einhänger angeordnetes Fahrzeugaggregat ausgeführt sein, für ein im Fahrzeug angeordnetes Fahrzeugaggregat und/oder für die weiter unten erwähnte Hebe-/Senkeinrichtung des Einhängers. Die Antriebseinrichtung kann zudem als Unterstützung für einen ECO-Tempomaten des Fahrzeugs dienen. Die Antriebseinrichtung kann z.B. eine oder mehrere Antriebseinheiten aufweisen.

Die Kopplungseinrichtung ist zur lenkfesten Befestigung des Einhängers an dem Fahrzeug ausgeführt, wodurch der Einhänger, insbesondere dessen Tragstruktur, zweckmäßig zur Längsrichtung des Fahrzeugs ausgerichtet bleibt, selbst wenn das Fahrzeug ein Lenk-/Kurvenmanöver ausführt. Übliche Anhänger mit z.B. einer Kugelkopfanhängerkupplung oder seiner Sattelkupplung folgen dem Zugfahrzeug gelenkig und somit nicht lenkfest.

Die Kopplungseinrichtung kann zudem ausgeführt sein, den Einhänger in Bezug auf seine Querrichtung zumindest geringfügig pendelbar an das Fahrzeug anzubringen. Der Einhänger ist insbesondere um eine Pendelachse pendelbar, die durch das unten erwähnte vordere Kopplungselement und das unten erwähnte hintere Kopplungsmittel definiert wird und/oder die sich im Wesentlichen mittig und in Längsrichtung des Einhängers erstreckt.

Die Kopplungseinrichtung kann ein hinteres, vorzugsweise hakenförmiges Kopplungsmittel zum Einhaken an ein am Fahrzeug vorgesehenes Lagermittel umfassen. Die Kopplungseinrichtung kann zudem ein vorderes, vorzugsweise ösenförmiges Kopplungselement zum Befestigen an einem am Fahrzeug vorgesehenen Lagerelement umfassen. Das hintere Kopplungsmittel und das vordere Kopplungselement sind zweckmäßig hintereinander angeordnet. Des Weiteren kann das hintere Kopplungsmittel und das vordere Kopplungselement so aufeinander abgestimmt sein, dass das hintere Kopplungsmittel um das Rad nach oben schwenkbar ist zum Befestigen an dem Lagermittel, während vorzugsweise das vordere Kopplungselement bereits an dem Lagerelement montiert ist.

Der Einhänger kann zudem mit einer rekuperativen Bremseinrichtung ausgestattet sein. Der Einhänger kann somit als Unterstützung für die Betriebsbremse und/oder die Dauerbremse dienen.

Es ist möglich, dass der Einhänger eine Hebe- und/oder Senkeinrichtung umfasst. Die Hebe- und/oder Senkeinrichtung dient insbesondere dazu, das Rad nach Montage des Einhängers am Fahrzeug wahlweise anzuheben oder abzusenken und so z.B. in Bodenkontakt zu bringen oder vom Boden zu beabstanden. Dadurch kann der Einhänger in einen Verweilzustand (z.B. Rad von Boden beabstandet) und zumindest einen Betriebszustand (z.B. Rad in Bodenkontakt) gebracht werden und somit quasi als Liftachse fungieren.

Die Hebe- und/oder Senkeinrichtung ist zudem vorzugsweise so ausgeführt, dass über sie die Aufnahme von Fahrzeuggewicht durch den Einhänger der Größe nach einstellbar gestaltet werden kann.

Es ist möglich, dass der Einhänger eine Tragstruktur umfasst, die zur Aufnahme von Fahrzeuggewicht ausgeführt ist, um die Traktion des Einhängers zu erhöhen und/oder zumindest eine Fahrzeugachse zu entlasten.

Die Tragstruktur umfasst vorzugsweise einen ersten zweckmäßig oberen Tragabschnitt und einen zweiten zweckmäßig unteren Tragabschnitt, die an einer Schwenkachse und mittels der Hebe- und/oder Senkeinrichtung schwenkbar miteinander verbunden sind. Der erste Tragabschnitt ist zur Montage an das Fahrzeug ausgeführt und kann vor der Montage der Höhe nach relativ zu dem zweiten Tragabschnitt veränderbar eingestellt werden. Der zweite Tragabschnitt kann nach der Montage mittels der Hebe-/Senkeinrichtung wahlweise angehoben oder abgesenkt werden, um so das Rad anzuheben oder abzusenken. Bevorzugt ist, dass sich die zuvor erwähnte Pendelachse und die Schwenkachse zumindest benachbart zu dem vorderen Kopplungselement schneiden.

Des Weiteren kann die Hebe- und/oder Senkeinrichtung genutzt werden, um die Tragstruktur der Höhe nach veränderbar zu gestalten, zweckmäßig vor der Montage des Einhängers an das Fahrzeug.

Der Einhänger kann mit einer Führungseinrichtung (z.B. einem Führungsbolzen) ausgestattet sein, die entlang einer am Fahrzeug ausgebildeten Führungsbahn geführt werden kann, um den Einhänger an vordefinierter Position und/oder mit vordefinierter Ausrichtung unter dem Fahrzeug zu platzieren.

Der Einhänger weist zumindest eine fluidische Schnittstelle zur Verbindung mit einer zugehörigen, am Fahrzeug ausgebildeten Schnittstelle auf. Die fluidische Schnittstelle des Einhängers dient dazu, das Fahrzeug mit einem Fluid zu versorgen. Zudem kann der Einhänger natürlich mit einer Schnittstelle versehen sein, über die ein Informationsaustausch, z.B. Steuerungsbefehle zwischen dem Einhänger und dem Fahrzeug übertragen werden können.

Der Einhänger kann zumindest zwei Räder umfassen, zwischen denen ein Achsdifferential ausgebildet ist.

Der Einhänger kann zudem mit einer Antriebseinrichtung ausgestattet sein, die dazu dient, das Rad des Einhängers anzutreiben und/oder die mit einer Schnittstelle versehen ist, über die eine Radachse des Fahrzeugs angetrieben werden kann. Dadurch kann der Einhänger zum zumindest unterstützenden, vorzugsweise zumindest zeitweise alleinigen, Antreiben des Fahrzeugs genutzt werden.

Die Erfindung ist nicht auf einen Einhänger beschränkt, sondern umfasst auch ein Fahrzeug in Form eines mehrspurigen Kraftfahrzeugs und/oder eines mehrspurigen Kraftfahrzeug-Anhängers, vorzugsweise eines Nutzfahrzeugs (z.B. ein Lastkraftwagen oder ein Omnibus) und/oder eines Nutzfahrzeug-Anhängers, das zweckmäßig zur insbesondere lösbaren Anbringung eines wie hierin beschriebenen Einhängers ausgeführt ist. Das Fahrzeug ist insbesondere mit einer Befestigungseinrichtung ausgestattet, die vorzugsweise ein vorderes Lagerelement und ein hinteres Lagermittel aufweist. Die Befestigungseinrichtung ist hinter der Frontseite und vor der Heckseite des Fahrzeugs, insbesondere zumindest teilweise unter einer Ladefläche des Fahrzeugs angeordnet, von der Unterseite des Fahrzeugs zugänglich und zum zweckmäßig lösbaren Verbinden mit der Kopplungseinrichtung des Einhängers wie hierin beschrieben ausgeführt. Die Befestigungseinrichtung ist vorzugsweise mit dem Fahrgestell des Fahrzeugs verbunden, z.B. mit einem oder mehreren Längs- und/oder Querträgers des Fahrgestells.

Das Fahrzeug kann z.B. eine unten am Fahrzeug verlaufende Führungsbahn für eine am Einhänger ausgeführte Führungseinrichtung aufweisen, um den Einhänger an vordefinierter Position und/oder mit vordefinierter Ausrichtung unter dem Fahrzeug zu platzieren. Die Führungsbahn beginnt zweckmäßig an einer Stelle, die von einer Außen- oder der Heckseite des Fahrzeugs aus quasi frei zugänglich ist.

Das Fahrzeug ist mit zumindest einer fluidischen Schnittstelle ausgestattet zur Verbindung mit einer zugehörigen, am Einhänger ausgebildeten Schnittstelle. Es ist möglich, dass die am Fahrzeug ausgeführte Schnittstelle insbesondere hinter der Frontseite und vor der Heckseite des Fahrzeugs angeordnet ist, zweckmäßig unter einer Ladefläche des Fahrzeugs angeordnet ist, von der Unterseite des Fahrzeugs zugänglich ist und zur Verbindung mit einer zugehörigen, am Einhänger ausgebildeten Schnittstelle ausgeführt ist, wodurch das Fahrzeug mit einem Fluid, elektrischer Energie und/oder Antriebskraft aus dem Einhänger versorgt werden kann. Wie schon zuvor in Bezug auf den Einhänger beschrieben, kann das Fahrzeug zudem mit einer Schnittstelle ausgestattet sein, über die Steuersignale oder andere Informationen zwischen dem Einhänger und dem Fahrzeug übertragen werden können.

Die Befestigungseinrichtung ist vorzugsweise so realisiert, dass das vordere Lagerelement und das hintere Lagermittel hinter der Frontseite und vor der Heckseite des Fahrzeugs angeordnet sind.

Das Fahrzeug kann zudem eine Radachse, vorzugsweise eine Hinterachse, umfassen, die mit einer Schnittstelle versehen ist, über die die Radachse mittels der Antriebseinrichtung des Einhängers angetrieben werden kann. Z.B. kann die Radachse eine Zapfwellenkopplung aufweisen oder in Form einer Durchtriebsachse konstruiert sein. Die Radachse kann z.B. eine einzelradangetriebene Achse oder eine quasi übliche Fahrzeugachse sein, die allerdings mit einer geeigneten Antriebsschnittstelle für den Einhänger versehen sind.

Die Erfindung umfasst außerdem eine Anordnung mit einem Fahrzeug wie hierin beschrieben und einem Einhänger wie hierin beschrieben.
- Fig. 1: zeigt eine perspektivische Ansicht eines Einhängers gemäß einer Ausführungsform der Erfindung,
- Fig. 2: zeigt eine Seitenansicht des Einhängers 1 aus Fig. 1 montiert an ein Fahrzeug und mit in Bodenkontakt stehenden Rädern gemäß einer Ausführungsform der Erfindung,
- Fig. 3: zeigt eine vergrößerte Seitenansicht eines Teils der Fig. 2,
- Fig. 4: zeigt den Einhänger und das Fahrzeug der Figuren 1 und 2 mit vom Boden beabstandeten Rädern des Einhängers,
- Fig. 5: zeigt eine vergrößerte Seitenansicht eines Teils der Fig. 4,
- Fig. 6: zeigt eine perspektivische Ansicht, die den Anbringvorgang eines Anhängers an ein Fahrzeug gemäß einer Ausführungsform der Erfindung veranschaulicht, und
- Fig. 7: zeigt eine schematische Draufsicht auf ein Fahrzeug mit montiertem Einhänger während eines Lenk-/Kurvenmanövers gemäß einer Ausführungsform der Erfindung.

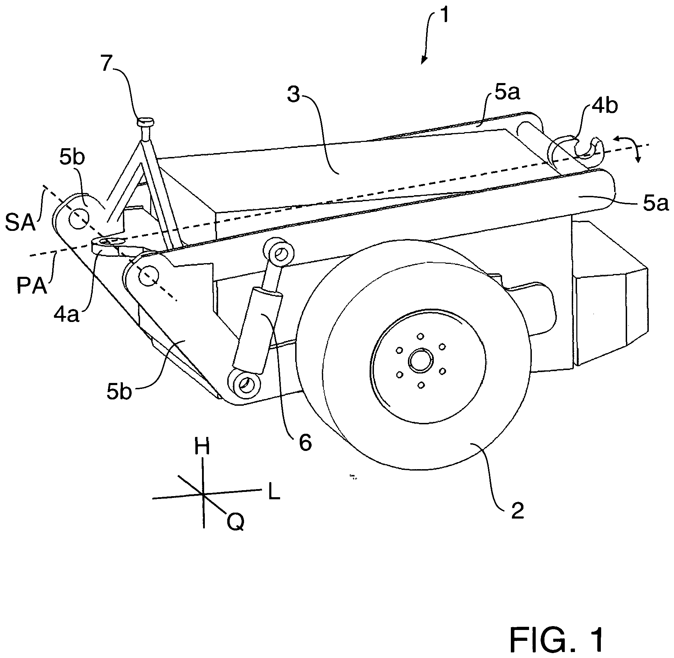

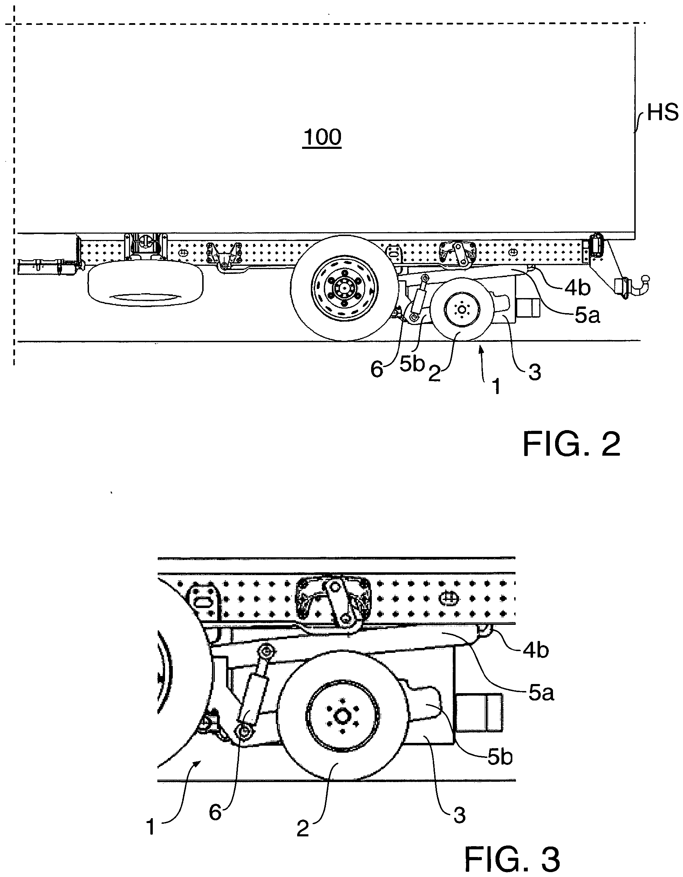

Figur 1 zeigt eine perspektivische Ansicht eines Einhängers 1 gemäß einer Ausführungsform der Erfindung. Der Einhänger 1 dient zur lösbaren Montage an ein in den Figuren 2 bis 6 gezeigtes Fahrzeug 100 in Form eines Nutzfahrzeugs bzw. Nutzfahrzeug-Anhängers.

Der Einhänger 1 umfasst zwei Räder 2, eine Kopplungseinrichtung 4a, 4b, über die der Einhänger 1 mit dem Fahrzeug 100 lösbar verbindbar ist, und einen Aufnahmeraum 3 für eine oder mehrere Funktionseinrichtungen. Der Einhänger 1 ist ausgeführt, um samt Rad 2 und samt Aufnahmeraum 3 unter das Fahrzeug 100 platziert zu werden. Der Aufnahmeraum 3 ist in Figur 1 als ein einziger, zusammenhängender Aufnahmeraum dargestellt. Es ist aber möglich, dass der Aufnahmeraum 3 mehrere, z.B. voneinander separierte oder miteinander verbundene, Teilbereiche aufweist.

Der Einhänger 1 dient dazu, eine oder mehrere der folgenden in den Figuren nicht zu sehenden Funktionseinrichtungen aufzunehmen: einen Energiespeicher, insbesondere eine Batterieeinrichtung, einen Kraftstofftank, eine Rang-Extender-Einrichtung für das Fahrzeug 100, zumindest ein Fahrzeugaggregat (z.B. ein sogenanntes Fahrzeug-Nebenaggregat oder einen sogenannten Fahrzeug-Zusatzverbraucher), zumindest eine Antriebseinrichtung z.B. für zumindest ein durch den Einhänger 1 aufgenommenes Fahrzeugaggregat, für zumindest ein im Fahrzeug 100 angeordnetes Fahrzeugaggregat oder für ein anderes anzutreibendes externes Funktionsteil. Bei dem Fahrzeugaggregat kann es sich z.B. um einen Hilfsantrieb, eine Pumpe, einen ECO-Tempomaten, einen Kompressor, einen Generator, ein Klimaanlagenteil, einen Ladebordwandantrieb für eine Ladebordwand, etc. handeln.

Der Einhänger 1 kann des Weiteren eine ebenfalls nicht zu sehende rekuperative Bremseinrichtung aufnehmen, mittels der sich der Einhänger 1 quasi durch Rekuperation selbst bremsen kann.

Der Einhänger 1 weist des Weiteren eine Tragstruktur 5a, 5b auf, die als räumliches Rahmentragwerk realisiert ist und zur Aufnahme von Fahrzeuggewicht ausgeführt ist, um eine oder mehrere Fahrzeugachsen nach Bedarf entlasten zu können.

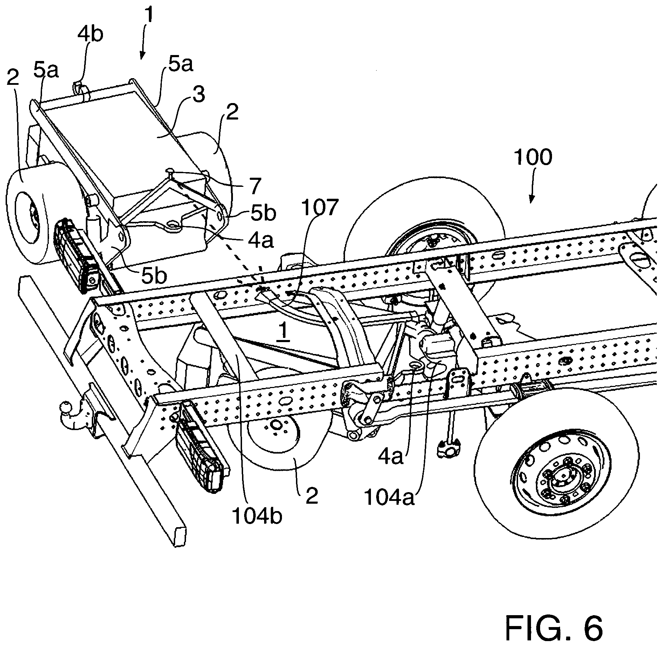

Die Kopplungseinrichtung 4a, 4b umfasst ein vorderes ösenförmiges Kopplungselement 4a zum Befestigen an einem am Fahrzeug 100 vorgesehenen vorderen Lagerelement 104a (vgl. Figur 6) und ein hinteres hakenförmiges Kopplungsmittel 4b zum Einhaken an einem am Fahrzeug 100 vorgesehenen hinteren Lagermittel 104b (vgl. Figur 6). Das ösenförmige Kopplungselement 4a und das hakenförmige Kopplungsmittel 4b sind in Längsrichtung L des Einhängers 1 hintereinander angeordnet. Dadurch wird ermöglicht, dass das hakenförmige Kopplungsmittel 4b um die Räder 2 nach oben schwenkbar ist, um mit dem Lagermittel 104b in Eingriff gebracht werden zu können, während das ösenförmige Kopplungselement 4a bereits an dem Lagerelement 104a montiert ist. Dadurch wird zudem ermöglicht, dass der Einhänger 1 um ein Pendelachse PA, die durch das ösenförmige Kopplungselement 4a und das hakenförmige Kopplungsmittel 4b definiert wird und sich vorzugsweise im Wesentlichen mittig und in Längsrichtung L des Einhängers 1 erstreckt, an das Fahrzeug 100 in Bezug auf die Querrichtung Q des Einhängers 1 pendelbar anbringbar ist, was durch den Doppelpfeil in Figur 1 angedeutet ist.

Der Einhänger 1 ist zudem mit einer Hebe-/Senkeinrichtung 6 ausgestattet, die z.B. zumindest einen Hydraulikzylinder, zumindest einen Luftfederbalg, etc. umfassen kann.

Die Hebe-/Senkeinrichtung 6 dient einerseits dazu, die Tragstruktur 5a, 5b und somit die Kopplungseinrichtung 4a, 4b im an das Fahrzeug 100 noch nicht montiertem Zustand der Höhen H veränderbar zu gestalten, wodurch der Einhänger 1 an Fahrzeuge 100 mit unterschiedlicher Bodenfreiheit angepasst werden kann. Die Bodenfreiheit von Fahrzeugen 100 variiert stark, z.B. in Abhängigkeit des Fahrzeug-Typs (z.B. Sattelzugmaschine, Verteiler-Lastkraftwagen, Geländewagen, Sportwagen, etc.), der Reifenluftdrücke des Fahrzeugs, des Beladungszustands des Fahrzeugs, etc..

Die Hebe-/Senkeinrichtung 6 dient andererseits dazu, die Räder 2 nach Montage des Einhängers 1 am Fahrzeug 100 wahlweise anzuheben oder abzusenken und somit wahlweise in Bodenkontakt zu bringen oder vom Boden zu beabstanden. Der Einhänger 1 kann somit z.B. als Liftachse für das Fahrzeug 100 fungieren. Die Räder 2 können zudem z.B. automatisch eingezogen werden, wenn im Fahrzeug 100 ein Rückwärtsgang eingelegt wird.

Die Hebe-/Senkeinrichtung 6 kann zudem so ausgeführt sein, dass das von der Tragstruktur 5a, 5b aufzunehmende Fahrzeuggewicht der Größe nach variabel einstellbar ist. Das kann z.B. durch Steuerung des Hydraulik- oder Luftdrucks in den zuvor erwähnten Hydraulikzylindern oder Luftfederbälgen realisiert werden.

Die Tragstruktur 5a, 5b umfasst einen ersten oberen Tragabschnitt 5a und einen zweiten unteren Tragabschnitt 5b, die an einer Schwenkachse SA und mittels der Hebe-/Senkeinrichtung 6 miteinander verbunden sind. Der erste Tragabschnitt 5a dient mittels der Kopplungseinrichtung 4a, 4b zur Montage an das Fahrzeug 100, während der zweite Tragabschnitt 5b die Räder 2 hält. Mittels der Hebe-/Senkeinrichtung 6 kann der zweite Tragabschnitt 5b und somit die Räder 2 angehoben oder gesenkt werden, wenn der Einhänger 1 am Fahrzeug 100 montiert ist. Mittels der Hebe-/Senkeinrichtung 6 kann zudem der erste Tragabschnitt 5a der Höhe H nach relativ zu dem zweiten Tragabschnitt 5b veränderlich eingestellt werden, bevor der Einhänger 1 an das Fahrzeug 100 montiert wird.

Figur 1 ist ferner zu entnehmen, dass sich die Schwenkachse SA und die Pendelachse PA zumindest benachbart zu dem ösenförmigen Kopplungselement 4a schneiden.

Der Einhänger 1 ist zudem mit einer Führungsrichtung 7 in Form eines nach oben abstehenden Führungsbolzens oder Führungsstifts ausgestattet. Die Führungseinrichtung 7 kann entlang einer am Fahrzeug 100 ausgebildeten Führungsbahn 107 (vgl. Figur 6) geführt werden, um den Einhänger 1 an vordefinierter Position und zugleich mit vorzugsweise vordefinierter Ausrichtung unter dem Fahrzeug 100 zu platzieren.

Der Einhänger 1 ist so gestaltet, dass er händisch unter das Fahrzeug 100 platziert werden kann. Der Einhänger 1 kann alternativ mit einer Antriebseinrichtung zum Antreiben der Räder 2 ausgestattet sein. Die Antriebseinrichtung kann den Einhänger 1 zumindest abschnittsweise mit vordefinierter Geschwindigkeit entlang der Führungsbahn 107 zu oder weg von der vordefinierten Position fahren lassen. Das ist insbesondere dann von Vorteil, wenn der Einhänger 1 an der vordefinierten Position mit dem Fahrzeug 100 betriebsfertig verbunden wird. Es wäre dann nicht erforderlich, dass sich eine Person unter das Fahrzeug 100 begibt, um den Einhänger 1 mit dem Fahrzeug 100 zu verbinden. Der Einhänger 1 ermöglicht somit einen zumindest teilautomatisierten Verbindungsvorgang an das Fahrzeug 100.

Der Einhänger 1 kann eine oder mehrere Schnittstellen umfassen, die zur Verbindung mit einer oder mehreren komplementären am Fahrzeug 100 ausgeführten Schnittstellen dienen. Die Schnittstellen können unterschiedlicher Art sein und z.B. zur Übertragung eines Fluids (z.B. eines Kraftstoffs, Gases, etc.), elektrischer Energie und/oder Antriebskraft von dem Einhänger 1 auf das Fahrzeug 100 dienen. Natürlich kann der Einhänger 1 zudem eine Schnittstelle umfassen, mittels der Informationen, Daten, Befehle, etc. zwischen dem Einhänger 1 und dem Fahrzeug 100 ausgetauscht werden können.

Figur 1 ist ferner zu entnehmen, dass die Kopplungseinrichtung 4a, 4b und die Führungseinrichtung 7 an dem ersten Tragabschnitt 5a festgemacht sind, während die Räder 2 von dem zweiten Tragabschnitt 5b gehalten werden.

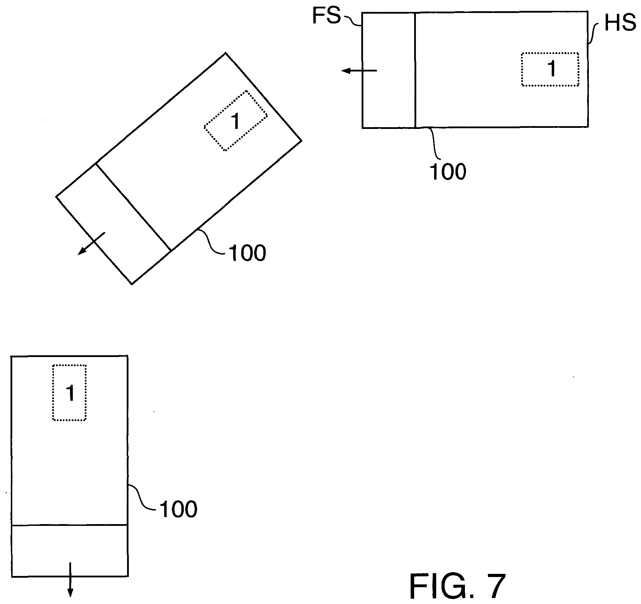

Figur 2 zeigt eine Seitenansicht eines Teils eines Fahrzeugs 100 (z.B. ein Nutzfahrzeug oder ein Nutzfahrzeug-Anhänger) und des Einhängers 1 aus Figur 1 gemäß einer Ausführungsform der Erfindung, während Figur 3 eine vergrößerte Seitenansicht insbesondere des Einhängers 1 zeigt. Die Figuren 2 und 3 zeigen den Einhänger 1 in einem Betriebszustand, in dem die Hebe-/Senkeinrichtung 6 die Räder 2 in Bodenkontakt hält, und der Einhänger 1 somit nicht zur Fahrzeugmasse zählt. Bezugszeichen HS kennzeichnet die Heckseite des Fahrzeugs 100, während die Frontseite FS (vgl. Figur 7) in Figur 2 nicht zu sehen ist.

Den Figuren 2 und 3 kann insbesondere entnommen werden, dass der Einhänger 1 kein klassischer Anhänger zum Ankuppeln hinter ein Zugfahrzeug ist, sondern so ausgeführt ist, das er samt Rädern 2 und samt Aufnahmeraum 3 unter das Fahrzeug 100 platziert werden kann. Der Einhänger 1 ist samt Rädern 2 und samt des Aufnahmeraums 3 hinter der Frontseite und vor der Heckseite des Fahrzeugs 100 platziert. Im Rahmen der Erfindung muss der Einhänger 1 allerdings nicht zwingend vollständig unter dem Fahrzeug 100 angeordnet werden. Vielmehr können auch Teile des Einhängers 1 von dem Fahrzeug 100 z.B. nach hinten oder zur Seite abstehen.

Der Einhänger 1 ist benachbart zu einer Fahrzeughinterachse montiert, um mit der Fahrzeughinterachse eine Art Tandemachsanordnung oder Durchtriebsnachlaufachse zu bilden. Die Platzierung des Einhängers 1 unter das Fahrzeug 100 ermöglicht zudem, dass der Einhänger 1 nahe zu Fahrzeugkomponenten positionierbar ist, die mit dem Einhänger 1 in Wirkverbindung gebracht werden sollen.

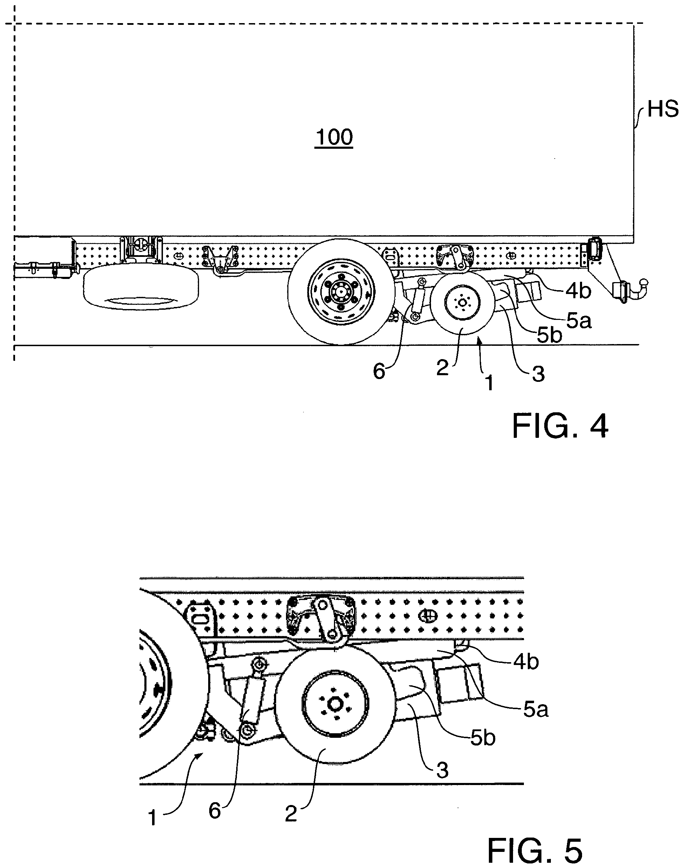

Figur 4 zeigt eine Seitenansicht eins Teils des Fahrzeugs 100 und des Einhängers 1 der Figuren 2 und 3, während Figur 5 eine vergrößerte Seitenansicht insbesondere des Einhängers 1 zeigt. Die Figuren 4 und 5 zeigen den Einhänger 1 in einem Verweilzustand, in dem die Hebe-/Senkeinrichtung 6 die Räder 2 vom Boden beabstandet hält.

Figur 6 zeigt eine perspektivische Ansicht des Einhängers 1 und eines Teils des Fahrzeugs 100. In Figur 6 ist der Laderaum nebst Ladeboden des Fahrzeugs 100 zur Veranschaulichungszwecken weggelassen, so dass ein perspektivischer Blick von oben auf das Fahrgestell des Fahrzeugs 100 und dem darunter platzierten Einhänger 1 ermöglicht wird. Insbesondere zeigt Figur 6 die am Fahrzeug 100 ausgebildete Befestigungseinrichtung 104a, 104b zur Montage des Einhängers 1. Die Befestigungseinrichtung 104a, 104b ist mit dem Fahrgestell des Fahrzeugs 100 verbunden. Die Befestigungseinrichtung 104a, 104b umfasst das vordere Lagerelement 104a in Form einer Rockinger- oder Maulkupplung zur Befestigung des ösenförmigen Kopplungselements 4a des Einhängers 1 und das hintere Lagermittel 104b in Form einer simplen Querstange zum Befestigen des hakenförmigen Kopplungsmittels 4b des Einhängers 1. Das vordere Lagerelement 104a und das hintere Lagermittel 104b sind hinter der Frontseite FS und vor der Heckseite HS des Fahrzeugs 100 angeordnet, unter einer Ladefläche des Fahrzeugs 100 platziert, von der Unterseite des Fahrzeugs 100 zugänglich und zum lösbaren Verbinden mit der Kopplungseinrichtung 4a, 4b des Einhängers 1 ausgeführt. Zumindest ein Teil der Befestigungseinrichtung 104a, 104b ist benachbart zu einer Fahrzeughinterachse angeordnet, wodurch die Fahrzeughinterachse und der Einhänger 1 eine Art Tandemachsanordnung oder Durchtriebsnachlaufachse bilden können.

Figur 6 zeigt außerdem die Führungsbahn 107, die zum Führen der Führungseinrichtung 7 des Einhängers 1 dient, um den Einhänger 1 an vordefinierter Position und vorzugsweise mit vordefinierter Ausrichtung unter dem Fahrzeug 100 zu platzieren, was durch die gestrichelte Linie in Figur 6 angedeutet ist. Die Führungsbahn 107 startet an einer Stelle, die von einer Außenseite des Fahrzeugs 100 aus quasi frei zugänglich ist, und endet an der vordefinierten Position unter dem Fahrzeug 100. Die Führungsbahn 107 kann alternativ auch an der Heckseite HS des Fahrzeugs 100 beginnen.

Figur 7 zeigt eine schematische Draufsicht auf ein Fahrzeug 100 und einen Einhänger 1 gemäß einer Ausführungsform der Erfindung während eines Lenk-/Kurvenmanövers. Die Pfeile kennzeichnen die Fahrtrichtung des Fahrzeugs 100. Bezugszeichen HS kennzeichnet die Heckseite des Fahrzeugs 100, während Bezugszeichen FS die Frontseite des Fahrzeugs 100 kennzeichnet.

Figur 7 kann insbesondere entnommen werden, dass der Einhänger 1 lenkfest an das Fahrzeug 100 montiert ist. Dadurch wird gewährleistet, dass der Einhänger 1, insbesondere die Tragstruktur 5a, 5b selbst während eines Lenkvorgangs des Fahrzeugs 100 zur Längsrichtung L des Fahrzeugs 100 entsprechend einer Fahrzeugachse ausgerichtet bleibt.

Zu erwähnen ist, dass die Erfindung ebenso Ausführungsformen mit einem Rad, zwei Rädern oder sogar mehr als zwei Rädern umfasst.

Zu erwähnen ist außerdem, dass der Einhänger 1 mit einer Portalachsenkonstruktion ausgestattet sein kann, die der Art nach aus dem Stand der Technik bekannt ist und zweckmäßig in der Lage ist, extrem hohes Fahrzeuggewicht aufzunehmen (z.B. bis zu ungefähr maximal 13 Tonnen Achslast). Der Aufnahmeraum 3 kann z.B. von der Portalachse teilweise eingerahmt werden, was zu einem kompakten Einhänger 1 führt.

Hervorzuheben ist nochmals, dass der Einhänger 1, insbesondere dessen Aufnahmeraum 3 genutzt werden kann, um z.B. sonst üblicherweise fest in das Fahrzeug 100 integrierte Funktionseinrichtungen und/oder fahrzeugunterstützende, zweckmäßig zusätzliche Funktionseinrichtungen aufzunehmen.

Der Aufnahmeraum 3 kann im Rahmen der Erfindung z.B. ein einzelner Aufnahmeraum sein oder mehrere, z.B. voneinander separierte oder miteinander verbundene, Teilbereiche umfassen.

Die Erfindung ist nicht auf die oben beschriebenen bevorzugten Ausführungsformen beschränkt. Darüber hinaus beansprucht die Erfindung auch Schutz für den Gegenstand und die Merkmale der Unteransprüche unabhängig von den in Bezug genommenen Merkmalen und Ansprüche.

## Patentansprüche

1. Einhänger (1) für ein Fahrzeug (100), nämlich ein mehrspuriges Nutzfahrzeug und/oder ein mehrspuriger Nutzfahrzeug-Anhänger, mit
- zumindest einem Rad (2), vorzugsweise zumindest zwei Rädern (2),
- ner Kopplungseinrichtung (4a, 4b), über die der Einhänger (1) mit dem Fahrzeug (100) verbindbar ist, und
- zumindest einem Aufnahmeraum (3) für eine oder mehrere Funktionseinrichtungen,
wobei
- der Einhänger (1) ausgeführt ist, um samt Rad (2) und/oder samt Aufnahmeraum (3) unter das Fahrzeug (100) platziert zu werden,
**dadurch gekennzeichnet, dass**
- der Einhänger (1) zumindest eine fluidische Schnittstelle zur Verbindung mit einer zugehörigen, am Fahrzeug (100) ausgebildeten Schnittstelle aufweist, über die das Fahrzeug (100) mit einem Fluid versorgbar ist.

2. Einhänger (1) nach Anspruch 1, wobei der Einhänger (1) ausgeführt ist, um samt Rad (2) und/oder samt Aufnahmeraum (3) hinter der Frontseite und vor der Heckseite des Fahrzeugs (100) platziert zu werden.

3. Einhänger (1) nach Anspruch 1 oder 2, wobei der Einhänger (1) dazu dient,
- zumindest einen Energiespeicher, insbesondere eine Batterieeinrichtung, aufzunehmen, und/oder
- einen Kraftstofftank, aufzunehmen.

4. Einhänger (1) nach einem der vorhergehenden Ansprüche, wobei der Einhänger (1) dazu dient, eine Range-Extender-Einrichtung für das Fahrzeug (100) aufzunehmen.

5. Einhänger (1) nach einem der vorhergehenden Ansprüche, wobei der Einhänger (1) dazu dient, zumindest ein Fahrzeugaggregat aufzunehmen.

6. Einhänger (1) nach einem der vorhergehenden Ansprüche, wobei der Einhänger (1) dazu dient, zumindest eine Antriebseinrichtung aufzunehmen.

7. Einhänger (1) nach einem der Ansprüche 3 bis 6, wobei der Energiespeicher und/oder die Antriebseinrichtung für zumindest ein im Fahrzeug (100) und/oder am Einhänger (1) angeordnetes Fahrzeugaggregat ausgeführt ist.

8. Einhänger (1) nach Anspruch 6 oder 7, wobei die Antriebseinrichtung dazu dient, das Rad (2) des Einhängers (1) anzutreiben, und/oder mit einer Schnittstelle versehen ist, die zum Antreiben einer Radachse des Fahrzeugs (100) ausgeführt ist.

9. Einhänger (1) nach einem der vorhergehenden Ansprüche, wobei die Kopplungseinrichtung (4a, 4b) ausgeführt ist, den Einhänger (1) an das Fahrzeug (100) lenkfest anzubringen, vorzugsweise so, dass der Einhänger (1) selbst während eines Lenkvorgangs zur Längsrichtung (L) des Nutzfahrzeugs (100) ausgerichtet bleibt.

10. Einhänger (1) nach einem der vorhergehenden Ansprüche, wobei die Kopplungseinrichtung (4a, 4b) ausgeführt ist, den Einhänger (1) in Bezug auf seine Querrichtung (Q) pendelbar an das Fahrzeug (100) anzubringen.

11. Einhänger (1) nach einem der vorhergehenden Ansprüche, wobei die Kopplungseinrichtung (4a, 4b) ein hinteres, vorzugsweise hakenförmiges Kopplungsmittel (4b) zum Befestigen an einem am Fahrzeug (100) vorgesehenen Lagermittel (104b) umfasst.

12. Einhänger (1) nach einem der vorhergehenden Ansprüche, wobei die Kopplungseinrichtung (4a, 4b) ein vorderes, vorzugsweise ösenförmiges Kopplungselement (4a) zum Befestigen an einem am Fahrzeug (100) vorgesehenen Lagerelement (104a) umfasst.

13. Einhänger (1) nach Ansprüchen 11 und 12, wobei das hintere Kopplungsmittel (4b) und das vordere Kopplungselement (4a) hintereinander angeordnet und so aufeinander abgestimmt sind, dass das hintere Kopplungsmittel (4b) um das Rad (2) nach oben schwenkbar ist zum Befestigen an dem Lagermittel (104b).

14. Einhänger (1) nach einem der vorhergehenden Ansprüche, wobei der Einhänger (1) eine rekuperative Bremseinrichtung umfasst.

15. Einhänger (1) nach einem der vorhergehenden Ansprüche, wobei der Einhänger (1) eine Hebe- und/oder Senkeinrichtung (6) umfasst.

16. Einhänger (1) nach Anspruch 15, wobei die Hebe-/Senkeinrichtung (6)
- ausgeführt ist, um das Rad (2) nach Montage des Einhängers (1) am Fahrzeug (100) wahlweise anzuheben oder abzusenken,
- ausgeführt ist, um das Rad (2) wahlweise in Bodenkontakt zu bringen oder vom Boden zu beabstanden, und/oder
- ausgeführt ist, um die Aufnahme von Fahrzeuggewicht durch den Einhänger (1) der Größe nach einstellbar zu gestalten.

17. Einhänger (1) nach einem der vorhergehenden Ansprüche, wobei der Einhänger (1) eine Tragstruktur (5a, 5b) umfasst, die zur Aufnahme von Fahrzeuggewicht ausgeführt ist, zur Traktionserhöhung des Einhängers (1) und/oder zur Entlastung zumindest einer Fahrzeugachse.

18. Einhänger (1) nach Ansprüchen 16 und 17, wobei die Hebe-/Senkeinrichtung (6) ausgeführt ist, die Tragstruktur (5a, 5b) der Höhe (H) nach veränderbar zu gestalten.

19. Einhänger (1) nach Anspruch 17 oder 18, wobei die Tragstruktur (5a, 5b) einen ersten Tragabschnitt (5a) und einen zweiten Tragabschnitt (5b) umfasst, die an einer Schwenkachse (SA) und mittels der Hebe-/Senkeinrichtung (6) schwenkbar miteinander verbunden sind.

20. Einhänger (1) nach einem der Ansprüche 15 bis 19, wobei der Einhänger (1) eine Antriebseinrichtung für die Hebe-/Senkeinrichtung (6) umfasst.

21. Einhänger (1) nach einem der vorhergehenden Ansprüche, wobei der Einhänger (1) eine Führungseinrichtung (7) umfasst, die entlang einer am Fahrzeug (100) ausgebildeten Führungsbahn (107) führbar ist, um den Einhänger (1) an vordefinierter Position und/oder mit vordefinierter Ausrichtung unter dem Fahrzeug (100) zu platzieren.

22. Einhänger (1) nach einem der vorhergehenden Ansprüche, wobei ein Achsdifferential zwischen zwei Rädern (2) des Einhängers (1) ausgebildet ist.

23. Einhänger (1) nach einem der vorhergehenden Ansprüche, wobei der Einhänger (1) zumindest eine elektrische und/oder antriebskraftbezogene Schnittstelle zur Verbindung mit einer zugehörigen, am Fahrzeug (100) ausgebildeten Schnittstelle aufweist, über die das Fahrzeug (100) mit elektrischer Energie und/oder Antriebskraft versorgbar ist.

24. Fahrzeug (100), nämlich ein mehrspuriges Nutzfahrzeug und/oder ein mehrspuriger Nutzfahrzeug-Anhänger, zur Anbringung eines Einhängers (1) nach einem der vorhergehenden Ansprüche und mit einer Befestigungseinrichtung (104a, 104b), die
- hinter der Frontseite (FS) und vor der Heckseite (HS) des Fahrzeugs (100) angeordnet ist,
- von der Unterseite des Fahrzeugs (100) zugänglich ist, und
- zum Verbinden mit der Kopplungseinrichtung (4a, 4b) des Einhängers (1) ausgeführt ist,
- **dadurch gekennzeichnet, dass** das Fahrzeug (100) mit zumindest einer fluidischen Schnittstelle ausgestattet ist, die
- hinter der Frontseite (FS) und vor der Heckseite (HS) des Fahrzeugs (100) angeordnet ist,
- von der Unterseite des Fahrzeugs (100) zugänglich ist,
- zur Verbindung mit einer zugehörigen, am Einhänger (1) ausgebildeten Schnittstelle dient, und
- über die das Fahrzeug (100) mit einem Fluid aus dem Einhänger (1) versorgbar ist.

25. Fahrzeug (100) nach Anspruch 24, wobei das Fahrzeug (100) eine unter dem Fahrzeug (100) verlaufende Führungsbahn (107) für die Führungseinrichtung (7) des Einhängers (1) aufweist, um den Einhänger (1) an vordefinierter Position und/oder mit vordefinierter Ausrichtung unter dem Fahrzeug (100) zu platzieren.

26. Fahrzeug (100) nach Anspruch 24 oder 25, wobei das Fahrzeug (100) mit zumindest einer elektrischen und/oder antriebskraftbezogenen Schnittstelle ausgestattet ist, die
- hinter der Frontseite (FS) und vor der Heckseite (HS) des Fahrzeugs (100) angeordnet ist,
- von der Unterseite des Fahrzeugs (100) zugänglich ist,
- zur Verbindung mit einer zugehörigen, am Einhänger (1) ausgebildeten Schnittstelle dient, und
- über die das Fahrzeug (100) mit elektrischer Energie und/oder Antriebskraft aus dem Einhänger (1) versorgbar ist.

27. Fahrzeug (100) nach einem der Ansprüche 24 bis 26, wobei die Befestigungseinrichtung (104a, 104b) ein vorderes Lagerelement (104a) und ein hinteres Lagermittel (104b) umfasst, die hinter der Frontseite (FS) und vor der Heckseite (HS) des Fahrzeugs (100) angeordnet sind..

28. Fahrzeug (100) nach einem der Ansprüche 24 bis 27, wobei das Fahrzeug (100) eine Radachse mit einer Schnittstelle umfasst, über die die Radachse mittels der Antriebseinrichtung des Einhängers (1) antreibbar ist.

29. Fahrzeug (100) nach einem der Ansprüche 24 bis 28 mit einem Einhänger (1) nach einem der Ansprüche 1 bis 23.

## Claims

1. Attachment unit (1) for a vehicle (100), specifically a multi-track commercial vehicle and/or a multi-track commercial vehicle trailer, comprising
- at least one wheel (2), preferably at least two wheels (2),
- a coupling arrangement (4a, 4b) via which the attachment unit (1) can be connected to the vehicle (100), and
- at least one receiving space (3) for one or more functional devices,
wherein
- the attachment unit (1) is configured to be positioned, together with wheel (2) and/or together with receiving space (3), under the vehicle (100),
**characterized in that**
- the attachment unit (1) has at least one fluidic interface for connection to an associated interface formed on the vehicle (100), via which fluidic interface the vehicle (100) can be supplied with a fluid.

2. Attachment unit (1) according to Claim 1, wherein the attachment unit (1) is configured to be positioned, together with wheel (2) and/or together with receiving space (3), behind the front end and in front of the rear end of the vehicle (100).

3. Attachment unit (1) according to Claim 1 or 2, wherein the attachment unit (1) serves
- to accommodate at least one energy storage device, in particular a battery device, and/or
- to accommodate the fuel tank.

4. Attachment unit (1) according to any one of the preceding claims, wherein the attachment unit (1) serves to accommodate a range extender device for the vehicle (100).

5. Attachment unit (1) according to any one of the preceding claims, wherein the attachment unit (1) serves to accommodate at least one vehicle subsystem.

6. Attachment unit (1) according to any one of the preceding claims, wherein the attachment unit (1) serves to accommodate at least one drive arrangement.

7. Attachment unit (1) according to any one of Claims 3 to 6, wherein the energy storage device and/or the drive arrangement is/are configured for at least one vehicle subsystem arranged in the vehicle (100) and/or on the attachment unit (1).

8. Attachment unit (1) according to Claim 6 or 7, wherein the drive arrangement serves to drive the wheel (2) of the attachment unit (1) and/or is provided with an interface which is configured to drive a wheel axle of the vehicle (100).

9. Attachment unit (1) according to any one of the preceding claims, wherein the coupling arrangement (4a, 4b) is configured to attach the attachment unit (1) to the vehicle (100) in an unsteered manner, preferably in such a way that the attachment unit (1) remains aligned with the longitudinal direction (L) of the commercial vehicle (100) even during a steering process.

10. Attachment unit (1) according to any one of the preceding claims, wherein the coupling arrangement (4a, 4b) is configured to attach the attachment unit (1) to the vehicle (100) in a swingable manner with respect to its transverse direction (Q).

11. Attachment unit (1) according to any one of the preceding claims, wherein the coupling arrangement (4a, 4b) includes a rear, preferably hook-shaped, coupling means (4b) for fastening to a bearing means (104b) provided on the vehicle (100).

12. Attachment unit (1) according to any one of the preceding claims, wherein the coupling arrangement (4a, 4b) includes a front, preferably eye-shaped, coupling element (4a) for fastening to a bearing element (104a) provided on the vehicle (100).

13. Attachment unit (1) according to Claims 11 and 12, wherein the rear coupling means (4b) and the front coupling element (4a) are arranged one behind the other and are co-ordinated with one another in such a way that the rear coupling means (4b) can be swivelled up around the wheel (2) in order to be fastened to the bearing means (104b).

14. Attachment unit (1) according to any one of the preceding claims, wherein the attachment unit (1) includes a regenerative braking device.

15. Attachment unit (1) according to any one of the preceding claims, wherein the attachment unit (1) includes a raising and/or lowering device (6).

16. Attachment unit (1) according to Claim 15, wherein the raising/lowering device (6)
- is configured selectively to raise or lower the wheel (2) after the attachment unit (1) has been installed on the vehicle (100),
- is configured selectively to bring the wheel (2) into contact with the ground or to move it at a distance therefrom, and/or
- is designed to configure the amount of vehicle weight supported by the attachment unit (1) to be adjustable.

17. Attachment unit (1) according to any one of the preceding claims, wherein the attachment unit (1) includes a support structure (5a, 5b) which is configured to support vehicle weight in order to increase the traction of the attachment unit (1) and/or to relieve the load on at least one vehicle axle.

18. Attachment unit (1) according to Claims 16 and 17, wherein the raising/lowering device (6) is designed to configure the support structure (5a, 5b) to be variable with respect to height (H).

19. Attachment unit (1) according to Claim 17 or 18, wherein the support structure (5a, 5b) comprises a first support portion (5a) and a second support portion (5b) which are connected to one another swivellably at a swivel axis (SA) and by means of the raising/lowering device (6).

20. Attachment unit (1) according to any one of Claims 15 to 19, wherein the attachment unit (1) includes a drive arrangement for the raising/lowering device (6).

21. Attachment unit (1) according to any one of the preceding claims, wherein the attachment unit (1) includes a guide device (7) which can be guided along a guide track (107) formed on the vehicle (100) in order to position the attachment unit (1) at a predefined position and/or with a predefined orientation under the vehicle (100).

22. Attachment unit (1) according to any one of the preceding claims, wherein an axle differential is formed between two wheels (2) of the attachment unit (1).

23. Attachment unit (1) according to any one of the preceding claims, wherein the attachment unit (1) has at least one electrical and/or drive-power related interface for connection to an associated interface formed on the vehicle (100) via which the vehicle (100) can be supplied with electrical energy and/or drive power.

24. Vehicle (100), specifically a multi-track commercial vehicle and/or a multi-track commercial vehicle trailer, for attachment of an attachment unit (1) according to any one of the preceding claims and having a fastening arrangement (104a, 104b) which
- is arranged behind the front end (FS) and in front of the rear end (HS) of the vehicle (100),
- is accessible from the underside of the vehicle (100), and
- is configured to be connected to the coupling arrangement (4a, 4b) of the attachment unit (1),
- **characterized in that** the vehicle (100) is equipped with at least one fluidic interface which
- is arranged behind the front end (FS) and in front of the rear end (HS) of the vehicle (100),
- is accessible from the underside of the vehicle (100),
- serves to connect with an associated interface formed on the attachment unit (1), and
- via which the vehicle (100) can be supplied with a fluid from the attachment unit (1).

25. Vehicle (100) according to Claim 24, wherein the vehicle (100) has a guide track (107) running underneath the vehicle (100) for the guide device (7) of the attachment unit (1) in order to position the attachment unit (1) at a predefined position and/or with a predefined orientation under the vehicle (100).

26. Vehicle (100) according to Claim 24 or 25, wherein the vehicle (100) is equipped with at least one electrical and/or drive-power related interface which
- is arranged behind the front end (FS) and in front of the rear end (HS) of the vehicle (100),
- is accessible from the underside of the vehicle (100),
- serves to connect with an associated interface formed on the attachment unit (1), and
- via which the vehicle (100) can be supplied with electrical energy and/or drive power from the attachment unit (1).

27. Vehicle (100) according to any one of Claims 24 to 26, wherein the fastening arrangement (104a, 104b) comprises a front bearing element (104a) and a rear bearing means (104b) which are arranged behind the front end (FS) and in front of the rear end (HS) of the vehicle (100).

28. Vehicle (100) according to any one of Claims 24 to 27, wherein the vehicle (100) includes a wheel axle having an interface via which the wheel axle can be driven by means of the drive arrangement of the attachment unit (1).

29. Vehicle (100) according to any one of Claims 24 to 28 having an attachment unit (1) according to any one of Claims 1 to 23.

## Revendications

1. Dispositif d'accrochage (1) pour un véhicule (100), à savoir un véhicule utilitaire à plusieurs voies et/ou une remorque de véhicule utilitaire à plusieurs voix, comprenant
- au moins une roue (2), de préférence au moins deux roues (2),
- un dispositif d'accouplement (4a, 4b), par le biais duquel le dispositif d'accrochage (1) peut être connecté au véhicule (100), et
- au moins un espace de réception (3) pour un ou plusieurs dispositifs fonctionnels,
- le dispositif d'accrochage (1) étant réalisé pour être placé conjointement avec la roue (2) et/ou l'espace de réception (3) sous le véhicule (100),
**caractérisé en ce que**
- le dispositif d'accrochage (1) présente au moins une interface fluidique pour la connexion à une interface associée réalisée au niveau du véhicule (100), par le biais de laquelle le véhicule (100) peut être alimenté en un fluide.

2. Dispositif d'accrochage (1) selon la revendication 1, dans lequel le dispositif d'accrochage (1) est réalisé de manière à être placé conjointement avec la roue (2) et/ou l'espace de réception (3) derrière le côté avant et avant le côté arrière du véhicule (100).

3. Dispositif d'accrochage (1) selon la revendication 1 ou 2, dans lequel le dispositif d'accrochage (1) sert à recevoir
- au moins un accumulateur d'énergie, en particulier un dispositif de batterie, et/ou
- un réservoir de carburant.

4. Dispositif d'accrochage (1) selon l'une quelconque des revendications précédentes, dans lequel le dispositif d'accrochage (1) sert à recevoir un dispositif d'extension de portée pour le véhicule (100).

5. Dispositif d'accrochage (1) selon l'une quelconque des revendications précédentes, dans lequel le dispositif d'accrochage (1) sert à recevoir au moins un groupe du véhicule.

6. Dispositif d'accrochage (1) selon l'une quelconque des revendications précédentes, dans lequel le dispositif d'accrochage (1) sert à recevoir au moins un dispositif d'entraînement.

7. Dispositif d'accrochage (1) selon l'une quelconque des revendications 3 à 6, dans lequel l'accumulateur d'énergie et/ou le dispositif d'entraînement est réalisé pour au moins un groupe du véhicule disposé dans le véhicule (100) et/ou au niveau du dispositif d'accrochage (1).

8. Dispositif d'accrochage (1) selon la revendication 6 ou 7, dans lequel le dispositif d'entraînement sert à entraîner la roue (2) du dispositif d'accrochage (1), et/ou est pourvu d'une interface qui est réalisée pour entraîner un essieu du véhicule (100).

9. Dispositif d'accrochage (1) selon l'une quelconque des revendications précédentes, dans lequel le dispositif d'accouplement (4a, 4b) est réalisé pour monter le dispositif d'accrochage (1) de manière fixée en orientation sur le véhicule (100), de préférence de telle sorte que le dispositif d'accrochage (1) reste aligné avec la direction longitudinale (L) du véhicule utilitaire (100) même pendant une opération de direction.

10. Dispositif d'accrochage (1) selon l'une quelconque des revendications précédentes, dans lequel le dispositif d'accouplement (4a, 4b) est réalisé pour monter le dispositif d'accrochage (1) de manière à pouvoir osciller par rapport à sa direction transversale (Q) sur le véhicule (100).

11. Dispositif d'accrochage (1) selon l'une quelconque des revendications précédentes, dans lequel le dispositif d'accouplement (4a, 4b) comprend un moyen d'accouplement arrière (4b), de préférence en forme de crochet, pour la fixation à un moyen de support (104b) prévu sur le véhicule (100).

12. Dispositif d'accrochage (1) selon l'une quelconque des revendications précédentes, dans lequel le dispositif d'accouplement (4a, 4b) comprend un élément d'accouplement avant (4a), de préférence en forme d'oeillet, pour la fixation à un élément de support (104a) prévu sur le véhicule (100).

13. Dispositif d'accrochage (1) selon les revendications 11 et 12, dans lequel le moyen d'accouplement arrière (4b) et l'élément d'accouplement avant (4a) sont disposés l'un derrière l'autre et sont adaptés l'un à l'autre de telle sorte que le moyen d'accouplement arrière (4b) puisse pivoter autour de la roue (2) vers le haut pour la fixation au moyen de support (104b).

14. Dispositif d'accrochage (1) selon l'une quelconque des revendications précédentes, dans lequel le dispositif d'accrochage (1) comprend un dispositif de freinage à récupération.

15. Dispositif d'accrochage (1) selon l'une quelconque des revendications précédentes, dans lequel le dispositif d'accrochage (1) comprend un dispositif de levage et/ou d'abaissement (6).

16. Dispositif d'accrochage (1) selon la revendication 15, dans lequel le dispositif de levage/abaissement (6) est réalisé
- pour soulever ou abaisser la roue (2) de manière sélective après le montage du dispositif d'accrochage (1) sur le véhicule (100),
- pour amener la roue (2) en contact avec le sol ou pour l'écarter du sol, de manière sélective, et/ou
- pour configurer la réception du poids du véhicule par le dispositif d'accrochage (1) de manière ajustable en fonction de la taille.

17. Dispositif d'accrochage (1) selon l'une quelconque des revendications précédentes, dans lequel le dispositif d'accrochage (1) comprend une structure porteuse (5a, 5b) qui est réalisée pour recevoir le poids du véhicule, pour augmenter la traction du dispositif d'accrochage (1) et/ou pour décharger au moins un essieu du véhicule.

18. Dispositif d'accrochage (1) selon les revendications 16 et 17, dans lequel le dispositif de levage/abaissement (6) est réalisé pour configurer la structure porteuse (5a, 5b) de manière variable en hauteur (H).

19. Dispositif d'accrochage (1) selon la revendication 17 ou 18, dans lequel la structure porteuse (5a, 5b) comprend une première portion porteuse (5a) et une deuxième portion porteuse (5b) qui sont connectées l'une à l'autre de manière pivotante au niveau d'un axe de pivotement (SA) et au moyen du dispositif de levage/abaissement (6).

20. Dispositif d'accrochage (1) selon l'une quelconque des revendications 15 à 19, dans lequel le dispositif d'accrochage (1) comprend un dispositif d'entraînement pour le dispositif de levage/abaissement (6).

21. Dispositif d'accrochage (1) selon l'une quelconque des revendications précédentes, dans lequel le dispositif d'accrochage (1) comprend un dispositif de guidage (7) qui peut être guidé le long d'une voie de guidage (107) réalisée sur le véhicule (100), afin de placer le dispositif d'accrochage (1) dans une position prédéfinie et/ou avec une orientation prédéfinie sous le véhicule (100).

22. Dispositif d'accrochage (1) selon l'une quelconque des revendications précédentes, dans lequel un différentiel d'essieu est réalisé entre deux roues (2) du dispositif d'accrochage (1).

23. Dispositif d'accrochage (1) selon l'une quelconque des revendications précédentes, dans lequel le dispositif d'accrochage (1) présente au moins une interface électrique et/ou associée à la force d'entraînement pour la connexion à une interface associée réalisée sur le véhicule (100), par le biais de laquelle le véhicule (100) peut être alimenté en énergie électrique et/ou en force d'entraînement.

24. Véhicule (100), à savoir véhicule utilitaire à plusieurs voies et/ou remorque de véhicule utilitaire à plusieurs voies, pour le montage d'un dispositif d'accrochage (1) selon l'une quelconque des revendications précédentes et comprenant un dispositif de fixation (104a, 104b), qui
- est disposé derrière le côté avant (FS) et avant le côté arrière (HS) du véhicule (100),
- est accessible depuis le côté inférieur du véhicule (100), et
- est réalisé pour le raccordement au dispositif d'accouplement (4a, 4b) du dispositif d' accrochage (1),
- **caractérisé en ce que**
- le véhicule (100) est muni d'au moins une interface fluidique qui
- est disposée derrière le côté avant (FS) et avant le côté arrière (HS) du véhicule (100),
- est accessible depuis le côté inférieur du véhicule (100),
- sert au raccordement à une interface associée réalisée sur le dispositif de raccordement (1), et
- par le biais de laquelle le véhicule (100) peut être alimenté en un fluide provenant du dispositif d'accrochage (1).

25. Véhicule (100) selon la revendication 24, dans lequel le véhicule (100) présente une voie de guidage (107) s'étendant sous le véhicule (100) pour le dispositif de guidage (7) du dispositif d'accrochage (1), afin de placer le dispositif d'accrochage (1) dans une position prédéfinie et/ou avec une orientation prédéfinie sous le véhicule (100).

26. Véhicule (100) selon la revendication 24 ou 25, dans lequel le véhicule (100) est muni d'au moins une interface électrique et/ou associée à la force d'entraînement, qui
- est disposée derrière le côté avant (FS) et avant le côté arrière (HS) du véhicule (100),
- est accessible depuis le côté inférieur du véhicule (100),
- sert au raccordement à une interface associée, réalisée sur le dispositif d'accrochage (1), et
- par le biais de laquelle le véhicule (100) peut être alimenté en énergie électrique et/ou en force d'entraînement provenant du dispositif d'accrochage (1).

27. Véhicule (100) selon l'une quelconque des revendications 24 à 26, dans lequel le dispositif de fixation (104a, 104b) comprend un élément de support avant (104a) et un élément de support arrière (104b), qui sont disposés derrière le côté avant (FS) et avant le côté arrière (HS) du véhicule (100).

28. Véhicule (100) selon l'une quelconque des revendications 24 à 27, dans lequel le véhicule (100) comprend un essieu avec une interface par le biais de laquelle l'essieu peut être entraîné au moyen du dispositif d'entraînement du dispositif d'accrochage (1).

29. Véhicule (100) selon l'une quelconque des revendications 24 à 28 comprenant un dispositif d'accrochage (1) selon l'une quelconque des revendications 1 à 23.
